# EUROPÄISCHE PATENTANMELDUNG

(11) **EP 4 252 528 A1**
(43) Veröffentlichungstag der Anmeldung: **04.10.2023**
(21) Anmeldenummer: 22166325.5
(22) Anmeldetag: 01.04.2022
(51) Int. Cl.: A01G 31/02, A01G 31/06

(54) **PFLANZENTRÄGER ZUR AUFZUCHT VON PFLANZEN UND VERFAHREN ZUR AUFZUCHT VON PFLANZEN**

(71) Anmelder: Heron Innovations Factory GmbH, 6850 Dornbirn (AT)
(72) Erfinder: BEER, Christian, 6858 Schwarzach (AT)
(74) Vertreter: Riebling, Peter

(57) **Zusammenfassung**

Pflanzenträger (4, 4a, 4b, 4c, 4d) zur Aufzucht von Pflanzen mit mindestens einer Pflanzfläche (2), wobei die Pflanzen in mehreren nebeneinander angeordneten Aufnahmen (6) einsetzbar sind, wobei der Pflanzenträger (4, 4a, 4b, 4c, 4d) schlitzförmige, mindestens einseitig offene Aufnahmen (6) aufweist, in welche die Pflanzen in Richtung der Längserstreckung der Aufnahmen (6) einsetzbar sind.

## Beschreibung

Die Erfindung betrifft einen Pflanzenträger nach dem Oberbegriff des Anspruches 1, eine Vorrichtung zur Aufzucht von Pflanzen nach dem Oberbegriff des Anspruches 11, sowie ein Verfahren zur Aufzucht von Pflanzen nach dem Oberbegriff des Anspruches 15.

Ein Pflanzbehälter zur Aufzucht von Pflanzen kann beispielsweise bei einer vertikalen Landwirtschaft eingesetzt werden. Unter dem Begriff vertikale Landwirtschaft (engl. vertical farming) wird die Kultivierung von Pflanzen in geschlossenen Räumen, auf mehreren übereinanderliegenden Etagen unter natürlichem bzw. künstlichem Licht verstanden. Bei den Pflanzen handelt es sich um Nutzpflanzen, wie beispielsweise Obst und Gemüse, welche ganzjährig angebaut und geerntet werden. Dies wird insbesondere durch eine künstliche Beleuchtung, eine Klimasteuerung und eine gesteuerte Nährstoffversorgung erreicht.

Die vertikale Landwirtschaft benötigt deutlich weniger Grundfläche, da die Pflanzen in mehrstöckigen Gebäuden (sogenannten Farmscrapers) angebaut werden, welche nahe an Ballungsgebieten der Städte errichtet werden. Dadurch werden lange Transportwege von den Anbaugebieten zu den Verbrauchern vermieden. Weitere Vorteile sind die Steigerung der Nutzpflanzenproduktion, der Schutz vor Witterungseinflüssen, ein ressourcenschonender Anbau, die Wassereinsparung durch geschlossene Wasserkreisläufe, sowie die Nutzung von erneuerbaren Energien. Auf den Einsatz von Pestiziden und Fungiziden kann aufgrund der fehlenden Umwelteinflüsse ebenfalls verzichtet werden.

Bei der Hydrokultur handelt es sich um eine Anbaumethode, bei der die Pflanzen nicht in der Erde wurzeln, sondern in Behältern, in denen sie mit einem Substrat (bspw. Kokosfaser oder Steinwolle etc.) fixiert werden. Hydroponik ist eine Form der Hydrokultur und wird zum planmäßigen Anbau von Nutzpflanzen und Zierpflanzen eingesetzt. Bei einem hydroponischen System hängen die Wurzeln der Pflanze in einem Gemisch aus Wasser und darin gelösten Nährstoffen. Die Pflanze wird in der Regel auf einer Pflanzfläche mit z.B. einem Substrat oder einem Wachstumsmedium im Pflanzenbehälter fixiert. Die Versorgung der Pflanzen mit Wasser und Nährstoffen erfolgt über ein computergesteuertes Kreislaufsystem.

Unter dem Begriff Aeroponik wird eine Hydroponik-Anbaumethode verstanden, bei welcher die Pflanzen ohne ein Wachstumsmedium, wie z.B. Erde kultiviert werden. Die Wurzeln der Pflanze hängen dabei unterhalb einer Pflanzfläche frei in der Luft und werden in regelmäßigen Abständen mit einer Wasser-Nährstofflösung besprüht. Dies bewirkt eine Erhöhung des Sauerstoffgehalts im Wurzelsystem, was sich wiederum positiv auf das Pflanzenwachstum auswirkt.

Die Stecklinge bzw. jungen Pflanzen benötigen im Anfangsstadium wenig Grundfläche in den Pflanzbehältern. Es können somit viele kleine Pflänzchen in einem Pflanzbehälter eingesetzt werden. Mit zunehmendem Wachstum der Pflänzchen wird jedoch der Pflanzbehälter zu klein, so dass sich die Pflanzen gegenseitig beschatten. Zusätzlich wachsen die Wurzeln ineinander. Durch das Vereinzeln der Pflanzen wird eine bessere Belichtung der Pflanzen erreicht. Eine gute Belichtung während des Wachstums der Pflanzen spielt damit eine wichtige Rolle, denn mit einer guten Belichtung lässt sich der Gemüseertrag und Pflanzenertrag maximieren und die Pflanzen bleiben gesünder. Aufgrund des hohen Energiebedarfs durch die künstliche Belichtung, wird durch eine dichtere Anbaumethode weniger Energie pro Pflanze verbraucht. Wichtig ist, dass jedes Photon des künstlichen Lichtes möglichst auf eine grüne Fläche (Blätter etc.) der Pflanze trifft.

Ein weiterer, wichtiger Faktor bei der vertikalen Landwirtschaft spielt die Automatisierung, denn die automatisierten Produktionsstätten können nicht nur den Mangel an Feldarbeitskräften ausgleichen, sondern es kann auch 24 Stunden, 7 Tage kostengünstig und ressourcenschonend auf einer geringen Grundfläche frisches Gemüse angebaut und geerntet werden. Zusätzlich bringen Mitarbeiter Verunreinigungen in das System.

Aus dem Stand der Technik sind bereits Roboter bei der Aufzucht von Pflanzen bekannt. Es werden beispielsweise Transportroboter eingesetzt, welche die einzelnen Pflanzbehälter bzw. Pflanzen innerhalb des Regallagers bewegen und die einzelnen Pflanzen inkl. Substrat aus den Pflanzbehältern entnehmen und diese auf mehrere Behälter aufteilen.

Die US 9,854,750 B2 offenbart ein Verfahren und ein System zur automatisierten kommerziellen Zucht und Produktion von Pflanzen in kontrollierter Umgebung. Die Pflanzen werden künstlich belichtet und mit Nährstoffen versorgt und befinden sich in Pflanzschalen, welche in einem Behälter angeordnet sind. Je nach Wachstumsabschnitt und Pflanzengröße werden die einzelnen Pflanzen automatisiert umgepflanzt.

Des Weiteren sind bereits verschiedene Aufnahmen bekannt, mit welchen die einzelnen Pflanzen innerhalb eines Pflanzbehälters während der Wachstumsphase gehalten werden.

Die DE 297 14 151 U1 offenbart beispielsweise eine Pflanzvorrichtung mit einem nach oben offenen Pflanzbehälter, in welcher ein korbartiger Einsatz für die Aufnahme einer Pflanzkultur eingesetzt wird. Die Einsätze weisen alle die gleiche Größe auf, so dass diesen nicht an die jeweilige Größe der Pflanze während der Wachstumsphase angepasst werden können.

Mit der US 2020/0015430 A1 wird eine Aufzuchtvorrichtung für Pflanzen offenbart, welche in schlitzartige Aufnahmen angeordnet sind. Die Aufnahmen sind u-förmig ausgebildet und an den Stirnseiten offen. Eine automatisierte Entnahme der einzelnen Pflanzen gestaltet sich jedoch aufgrund der Form der Aufnahmen schwierig, da nur der Pflanzstiel freizugänglich ist und nicht das Pflanzsubstrat mit den Wurzeln der Pflanze.

Bei den bekannten Systemen für eine vertikale Landwirtschaft ist das automatisierte Vereinzeln der Pflanzen bzw. das automatisierte Umsetzen der Pflanzen sehr schwierig. Teilweise sind die Pflanzen fest mit der Pflanzfläche und der Aufnahme verwurzelt und werden beim Vereinzeln unsanft herausgerissen und dadurch beschädigt. Teilweise ist die einzelne Pflanze sehr schwierig zu erreichen, so dass ein automatisches Vereinzeln nicht möglich ist.

Aufgabe der Erfindung ist es daher, eine einfachere und kostengünstige Aufnahme für die Pflanzen bereitzustellen, welche ein einfaches Umsetzen bzw. Vereinzeln der Pflanzen während der Wachstumsphase ermöglicht und gleichzeitig den jeweiligen Pflanzen während der Wachstumsphase einen ausreichenden Abstand bereitstellt.

Zur Lösung der gestellten Aufgabe ist die Erfindung durch die technische Lehre des Anspruches 1, 11 und 15 gekennzeichnet.

Wesentliches Merkmal der Erfindung ist, dass der Pflanzenträger mindestens eine schlitzförmige, zumindest einseitig offene Aufnahme aufweist, in welche die Pflanzen in Richtung der Längserstreckung der Aufnahmen einsetzbar sind.

Bei der erfindungsgemäßen Ausführungsform werden bevorzugt mehrere unterschiedliche Pflanzenträger eingesetzt. Durch die unterschiedlichen Pflanzenträger kann die Pflanzfläche an das jeweilige Wachstumsstadium der Pflanzen angepasst werden.

Am Anfang der Wachstumsphase sind viele, kleine Pflanzen in einem ersten Pflanzenträger. Während der Wachstumsphase werden die Pflanzen von dem ersten Pflanzenträger entnommen und auf z.B. mehrere zweite Pflanzenträger verteilt. Der zweite Pflanzenträger weist weniger Aufnahmen für die Pflanzen auf. Damit stehen weniger Pflanzen mehr Platz und mehr Licht zur Verfügung. Durch die unterschiedlichen Pflanzenträger mit den unterschiedlichen Anzahlen an Aufnahmen können insbesondere in den frühen Wachstumsphasen mehr Pflanzen auf der gleichen großen Pflanzfläche kultiviert werden. Dadurch kann das künstlich erzeugte Licht besser ausgenutzt werden und die Stromkosten reduziert werden.

Vorzugsweise ist die Abmessung der Pflanzenträger immer gleich. Es handelt es sich somit um eine Standardgröße. Die Pflanzenträger unterscheiden sich jedoch zumindest hinsichtlich der Anzahl an Aufnahmen. Während der Wachstumsphase werden die Pflanzen mehrmals umgesetzt, wobei der nachfolgende Pflanzenträger stets weniger Aufnahmen für die Pflanzen aufweist. Dies bedeutet, dass während der Wachstumsphase die durchschnittliche Pflanzenanzahl pro Pflanzenträger verringert wird, wodurch mehr Platz und damit auch mehr Licht pro Pflanze zur Verfügung steht.

Aus dem Stand der Technik sind zwar bereits Pflanzenträger mit einer Standardgröße bekannt, jedoch weisen diese alle die gleiche Anzahl an Aufnahmen auf. Dadurch werden für die vielen, kleinen Pflanzen sehr viel Platz benötigt, welche während der Aufzucht mit einer künstlichen Lichtquelle beleuchtet werden müssen. Bei der erfindungsgemäßen Vorrichtung ist es hingegen möglich, insbesondere während der frühen Wachstumsphasen, das Licht für viele kleine Pflanzen optimal auszunutzen, da die Pflanzenträger viele Aufnahmen für viele Pflanzen aufweisen.

Der Pflanzenträger weist mehrere Aufnahmen für die einzelnen Pflanzen auf. Die Aufnahmen sind beispielsweise kammartig, rechenartig oder fingerartig ausgebildet. Vorzugsweise bestehen die Aufnahmen aus jeweils zwei parallelen, beabstandeten Stegen, zwischen welchen die einzelnen Pflanzen einsteckbar sind. Die beiden Stege bilden somit die Aufnahme für eine Pflanzenreihe.

Der Pflanzenträger weist mehrere beabstandete Stege auf, welche eine Aufnahme für die einzelnen Pflanzen bilden. Zwei beabstandete Stege bilden jeweils eine U-Form aus. Dies bedeutet, dass die Aufnahme einseitig offen ist. Die einzelnen Pflanzen können bei der Neubepflanzung oder während der Wachstumsphase ausgehend von der offenen Seite der beiden beabstandeten Stege, in die Aufnahme eingesetzt werden und werden dort von den beiden Stegen gehalten. Es erfolgt somit eine Positionierung bzw. Fixierung der einzelnen Pflanzen auf der Pflanzfläche, welche als Pflanzenträger ausgebildet ist.

Während der Wachstumsphase der Pflanzen wird der erste Pflanzenträger aus dem Pflanzbehälter herausgenommen werden. Der Pflanzenträger mit den eingesetzten Pflanzen wird somit von dem Pflanzbehälter getrennt. Dadurch sind die einzelnen Pflanzen leicht zugänglich. Bei einem Anheben des Pflanzenträgers sind die Pflanzen sowohl oberhalb der Pflanzfläche, als auch unterhalb der Pflanzfläche des Pflanzenträgers greifbar. Da die einzelnen Aufnahmen des Pflanzenträgers einseitig offen sind, können die Pflanzen auf einer Ebene herausgenommen werden. Dies bedeutet, dass die Pflanzen in horizontaler Richtung und nicht in vertikaler Richtung aus der Aufnahme entnehmbar sind. Nach der Entnahme der Pflanzen aus den Aufnahmen des ersten Pflanzenträgers werden die Pflanzen vereinzelt und die Aufnahmen eines zweiten Pflanzenträgers eingesetzt. Das Einsetzen erfolgt vorzugsweise wieder in horizontaler Richtung.

Das horizontale Entnehmen der Pflanze und das horizontale Einsetzen der Pflanze in die jeweilige Aufnahme hat den wesentlichen Vorteil, dass die Wurzeln bzw. das Substrat beim Umsetzen in einen neuen Pflanzenträger nicht beschädigt wird. Die Aufnahmen werden durch zwei beabstandete Stege gebildet. Die Stege weisen beispielsweise nur eine sehr geringe Stärke auf, wodurch die Pflanzen nur punktuelle gehalten werden.

Die Pflanzenträger unterscheiden sich vorzugsweise hinsichtlich der Anzahl an Aufnahmen. Die einzelnen Pflanzen haben damit während der Wachstumsphase stets einen ausreichenden Platz und werden ausreichend belichtet. Es ist aber auch möglich, dass der Abstand zwischen den Aufnahmen unterschiedlich ist. Je größer die Pflanze ist, desto größer ist der Abstand zwischen den beiden beabstandeten Stegen. Alternativ weist der Pflanzenträger die gleiche Anzahl an Aufnahmen auf, wobei beim Umsetzen der Pflanzen einzelne Aufnahmen frei gelassen werden.

Bei einer bevorzugten Ausführungsform gibt es vier Pflanzenträger mit jeweils einer unterschiedlichen Anzahl an Aufnahmen. Die vier Pflanzenträger entsprechen vier Wachstumsphasen. Dies bedeutet, dass während der gesamten Wachstumsphase der Pflanzen insgesamt vier Mal in einen Pflanzenträger eingesetzt und wieder herausgenommen werden. Bei jedem Umsetzvorgang der Pflanzen wird ein Pflanzenträger mit einer geringeren Anzahl an Aufnahmen für die Pflanzen verwendet. Dadurch wird der Abstand zwischen den Pflanzen erhöht und es werden während der Wachstumsphase immer mehr Pflanzenträger benötigt. Beispielsweise nimmt in der ersten Wachstumsphase ein erster Pflanzenträger insgesamt 200 Pflanzen auf und in der letzten, vierten Wachstumsphase nehmen 25 Behältereinsätze 8 Pflanzen auf.

Der Pflanzenträger bildet die Pflanzfläche. Mit der Pflanzfläche werden die Pflanzen innerhalb des Pflanzbehälters fixiert. Der Pflanzenträger besteht vorzugsweise aus Kunststoff. Es sind jedoch auch anderen Materialien, wie beispielsweise Faserverbundwerkstoffe, Metall, oder ein Naturstoff möglich.

Zwischen den beabstandeten Stegen werden die Pflanzen eingesetzt. Vorzugsweise befinden sich die Wurzeln der Pflanzen in einem Pflanzsubstrat. Das Pflanzsubstrat weist vorzugsweise eine relativ stabile Form auf, jedoch ist es gleichzeitig auch elastisch, so dass es zwischen den beabstandeten Stegen einklemmbar ist. Es ist aber auch möglich, dass die Pflanzen sich in einer korbartigen Aufnahme bzw. einem Pflanztopf befinden, welcher zwischen den beabstandeten Stegen klemmbar ist.

Vorzugsweise werden die einzelnen Pflanzen nur im Bereich des Pflanzsubstrates gehalten. Während des Umsetzvorganges werden die Pflanzen ausschließlich im Bereich des Pflanzsubstrates händisch oder von einer Vorrichtung aufgenommen und wieder abgesetzt. Dies ist durch die schlitzartigen Aufnahmen möglich, welche die Pflanzen im Bereich des Pflanzsubstrates klemmend halten, wobei ein gewisser Teilbereich unterhalb und/oder oberhalb der Aufnahme übersteht, welcher leicht greifbar ist. Die Wurzeln befinden sich somit unterhalb der Pflanzfläche und der Pflanzenspross befindet sich oberhalb der Pflanzfläche. Es findet somit eine horizontale und vertikale Fixierung der Pflanzen mit den Aufnahmen des Pflanzenträger statt.

Es ist aber auch möglich, dass die Pflanzen nur im Bereich des Pflanzenstiels oder an den einzelnen Blättern gehalten werden. Beispielsweise sind die Aufnahmen des Pflanzenträgers so eng, dass die Pflanzen mit ihren ersten Blättern auf der Pflanzfläche des Pflanzenträger aufliegen, wobei sich der Stiehl der Pflanze durch die Aufnahme erstreckt und sich die Wurzeln unterhalb der Pflanzfläche befinden.

Die Aufnahmen weisen somit eine Oberseite auf, welche die Pflanzfläche bildet und in deren Bereich der Pflanzenspross ist. Und die Aufnahmen weisen eine Unterseite auf, in deren Bereich sich zumindest teilweise die Pflanzsubstrate hineinerstrecken und dadurch leicht für den händischen oder maschinellen Umsetz- bzw. Vereinzelungsvorgang zugänglich sind.

Während der Wachstumsphase der Pflanzen werden die Pflanzen in unterschiedliche Pflanzenträger eingesetzt. Des Weiteren unterscheiden sich die Pflanzenträger hinsichtlich des Abstandes der Pflanzfläche gegenüber dem Boden des Pflanzbehälters. In der ersten Wachstumsphase weist der erste Pflanzenträger einen geringen Abstand gegenüber dem Boden des Pflanzbehälters auf, wodurch die relativ kurzen Wurzeln leicht mit der bodenseitigen Nährstofflösung im Pflanzbehälter in Kontakt sind. Während der Wachstumsphase werden unterschiedliche Pflanzenträger mit einem immer größer werdenden Abstand zwischen der Pflanzfläche und dem Boden des Pflanzbehälters eingesetzt. In der letzten Wachstumsphase besteht somit der größte Abstand zwischen der Pflanzfläche und dem Boden.

Durch die unterschiedlichen Abstände der Pflanzflächen findet ein vertikales Anheben der Pflanzen statt. Dadurch wird stets die optimalste Position für die Wurzeln der Pflanze gegenüber den Pflanzbehälterboden erreicht, in welchem sich das Gemisch aus Wasser, Nährstoffen und Sauerstoff befindet.

Der Pflanzenträger ist von einem Roboter manipulierbar. Beispielsweise kann ein 6-Achs-Roboter mit einem Greifer die Pflanzenträger aus dem Pflanzbehälter entnehmen und in einen anderen Pflanzbehälter umsetzen. Oder der Pflanzenträger wird von einem Seilgreifer aus dem Pflanzbehälter gehoben und umgesetzt. Es kann beispielsweise auch ein Tray-Stapler eingesetzt werden.

Vorzugsweise weist der Pflanzenträger an den Seitenwänden Abkantungen auf, mit welchen der Pflanzenträger an dem umlaufenden Rand des Pflanzbehälters eingehängt wird. Die Abkantungen können dergestalt ausgebildet sein, dass sie gleichzeitig leicht händisch oder maschinell greifbar sind. So kann die Abkantung beispielsweise als u-förmiges Profil ausgebildet sein, in welches zwei beabstandete Zinken leicht einfahren können und den gesamten Pflanzenträger anheben und absenken können.

Die Pflanzenträger mit den einseitig offenen Aufnahmen für die Pflanzen haben gegenüber dem Stand der Technik einen entscheidenden Vorteil. Während der Wachstumsphase der Pflanzen muss die Pflanzen beim Vereinzeln nicht nach oben aus der Pflanzfläche gezogen werden, sondern die Pflanzen werden seitlich aus den beabstandeten Stegen herausgezogen und danach zwischen die Stege eines neuen Pflanzenträgers eingesteckt. Dies ist möglich, weil der Pflanzenträger aus dem Pflanzbehälter herausnehmbar ist und damit die einzelnen Aufnahmen freizugänglich sind.

Bei einer bevorzugten Ausführungsform weist der Pflanzenträger eine Aufnahme für das automatisiertes Herausnehmen aus den Pflanzbehälter und das automatisierte Einsetzen in den Pflanzbehälter auf. Dies können beispielsweise eine Ausnehmung oder Öse sein, welche leicht von einem Roboter erkennbar und greifbar ist. Ferner besteht die Möglichkeit, dass der Pflanzenträger eine eigene Kupplung aufweist, an welche der Roboter andockt, um den Pflanzenträger zu bewegen. Selbstverständlich kann der Pflanzenträger auch von Hand bewegt werden.

Unter einem Pflanzbehälter versteht die vorliegende Erfindung sämtliche Behälterform, Gefäße, Kasten, Platten, Halterungen oder Regale, welche zur Aufzucht von Pflanzen geeignet sind. Vorzugsweise sollte der Pflanzbehälter so ausgebildet sein, dass er eine Nährstofflösung aufnehmen kann und gleichzeitig eine Halterung für den Pflanzenträger bildet.

Bei einer bevorzugten Ausführungsform ist der Pflanzbehälter als einseitig offener, durch umlaufende, randseitige Wände abgegrenzter transportabler Pflanzbehälter ausgebildet, in dessen Bodenraum eine Nährstofflösung zur Aufzucht der Pflanzen angeordnet ist. Der Bodenraum ist nach oben durch den Pflanzenträger mindestens teilweise abgedeckt. Der Pflanzenträger ist in dem Innenraum des Pflanzbehälters angeordnet. Dies bedeutet, dass der Pflanzenträger in dem Innenraum des Pflanzbehälters eingesetzt oder auch wieder aus dem Pflanzbehälter (automatisiert) entnommen werden kann. Bei dieser Ausführungsform können in einheitliche Pflanzbehälter unterschiedliche Pflanzenträger eingesetzt werden. Es ist aber auch möglich, dass der Pflanzbehälter und der Pflanzenträger eine Einheit ausbilden und fest miteinander verbunden sind.

Bei einer weiteren bevorzugten Ausführungsform ist der Pflanzbehälter als Halterung für die Pflanzfläche ausgebildet. Der Pflanzbehälter dient somit als Ständer bzw. Halterung, um die Pflanzfläche gegenüber der Nährstofflösung zu beabstanden. Beispielsweise ist eine solche Halterung innerhalb eines Regallagerplatzes angeordnet. Der Pflanzenträger wird dann in den Regallagerplatz eingehängt. Im Bodenbereich des Regallagerplatzes befindet sich dann die Nährstofflösung.

Die Nährstofflösung befindet sich beispielsweise in einer Wanne, in einem Regalboden, oder einer einseitig offenen Rinne. Es ist aber auch möglich, dass die Nährstofflösung durch eine offene Rinne fließt.

Der Pflanzbehälter besteht beispielsweise aus einem (lebensmittelechten) Kunststoff oder einem Metallwerkstoff bzw. Naturwerkstoff. Der Behälter sollte UV-beständig und einen Korrosionsschutz aufweisen. Des Weiteren sollte der Behälter waschbar ausgebildet sein, so dass er mehrmals verwendet werden kann.

Der erfindungsgemäße Pflanzbehälter wird vorzugsweise in einem Regallager (z.B. Fachbodenregallager) eingesetzt, wobei sich die Pflanzbehälter in vertikal übereinander angeordneten Regallagerplätzen befinden. Die Pflanzbehälter werden innerhalb des Regallagers mit einem Transportroboter bewegt.

Der Transportroboter ist beispielsweise wie der schienengebundene Transportroboter mit Hubplattform gemäß der DE 10 2017 121 638 A1 des gleichen Anmelders ausgebildet, auf welche vollumfänglich Bezug genommen wird. Des Weiteren kann auch ein Transportroboter gemäß der DE 10 2018 109 495 A1 eingesetzt werden, auf welche ebenfalls vollumfänglich Bezug genommen wird.

Bei einer bevorzugten Ausführungsform ist der Transportroboter zweiteilig. Der erste Teil des Transportroboters ist als Fahrwerk für das horizontale Fahren auf Schienen ausgebildet und der zweite Teil weist eine Hub-Plattform mit integriertem Lastenaufnahmemittel auf. Vorzugsweise ist der Transportroboter an der Hallendecke fahrbar angeordnet. Dadurch kann die darunter liegende Lagerfläche anderweitig genutzt werden. Die Ein- und Auslagerung der Pflanzbehälter erfolgt mit einem Lastaufnahmemittel, welches beispielsweise zwei ausfahrbare Zinken aufweist, die den Behälter unterfahren und mittels Zahnriemen präzise auf den Transportroboter laden.

Bei einer weiteren bevorzugten Ausführungsform weist der Pflanzenträger eine reflektierende Oberfläche auf. Durch die reflektierende Oberfläche wird die gesamte Lichtfläche auf die Pflanzen konzentriert bzw. die Pflanze auch von unten mit Licht versorgt. Die reflektierenden Flächen können entweder eine besondere Beschichtung oder eine besondere Farbe aufweisen, durch welche das Licht besonderes gut reflektiert bzw. in Richtung der Pflanzen umgeleitet wird.

Der Pflanzbehälter weist ferner mindestens eine Medienkupplung auf, über welcher Energie und/oder Daten/Signale und/oder Nährstoffe, Wasser oder Luft zugeführt werden.

Die Datenübertragung kann auch beispielsweise über eine Funktechnologie erfolgen (z.B. Bluetooth, ZigBee, WLAN, LTE, ISM, narrowband iot, lora etc.)

Der Pflanzbehälter wird mit den Pflanzen beispielswese mindestens einmal innerhalb 24 Stunden kontrolliert. Die Kontrolle kann beispielsweise in einer Analysestrasse erfolgen. Hierfür wird der Pflanzbehälter aus dem Regalplatz entnommen und zu einer Analysestrasse gebracht. Die Kontrolle erfolgt optisch mit einer Kamera und anhand des Gewichts mit einer Waage. Des Weiteren können die verschiedensten Daten zur Wasserqualität durch eine Sensorsonde aufgenommen werden. Die gewonnen Daten werden gespeichert und für eine Optimierung des Systems herangezogen.

Die Analyse kann jedoch auch auf dem Transportroboter erfolgen. Hier weist der Transportroboter eine Kamera und/oder eine Wiegeeinrichtung und/oder eine Messvorrichtung auf, mit welcher der Zustand der Pflanzen, sowie der Füllstand des Pflanzbehälters festgestellt werden. Diese Daten könnten auch vom Behälter selber an den Roboter gesendet werden.

Der Transportroboter kann ferner eine Kamera aufweisen, mit welcher ein Schädlingsbefall oder eine Krankheit an der Pflanze festgestellt wird.

Des Weiteren weist die Analysestrasse vorzugsweise eine Dockingstation auf, an welcher der Pflanzbehälter mit seiner Medienkupplung angedockt wird, um Energie und/oder Nährstoffe, Wasser oder Luft nachzufüllen. Ferner können die Daten aus dem Pflanzbehälter ausgelesen werden. Die Energieübertragung könnte auch wireless sein.

Der Pflanzbehälter kann ferner einen eigenen Energiespeicher aufweisen, welcher Energie für z.B. die Bewässerung oder für die Messvorrichtungen speichert und bereitstellt. Das Aufladen des Energiespeichers erfolgt beispielsweise induktiv in der Analysestrasse oder durch die Medienkupplung am Lagerplatz.

Bei der erfindungsgemäßen Ausführungsform können sowohl aktive, als auch passive Bewässerungssysteme eingesetzt werden.

Ein Beispiel für ein passives Bewässerungssystem ist das Dochtsystem, bei welchem die einzelnen Pflanzen in einem Substrat angeordnet sind und über einen Docht mit der darunter befindlichen Nährstofflösung verbunden sind. Durch die Kapillarwirkung des Dochtes wird das Wasser und die Nährstoffe zur Pflanze geführt.

Ein weiteres Beispiel für ein Bewässerungssystem ist eine Bewässerung mit der Nährfilmtechnik NFT (nutrient film technique). Hierbei umspült ein sehr dünner Wasserschwall, der alle für das Pflanzenwachstum notwendigen gelösten Nährstoffe enthält, permanent die freiliegenden Wurzeln im Bodenbereich des Pflanzbehälters.

Ein weiteres Beispiel ist die Verneblung mittels Ultraschallvernebler. Der Ultraschallvernebler weist ein piezokeramisches Element (Membran) auf, welches durch Anlegen einer elektrischen Spannung (Gleichstrom oder Wechselstrom) in Schwingung versetzt wird. Diese Schwingung breitet sich auf das umgebende Wasser, bzw. die Nährstofflösung aus und löst kleine Tropfen von der Oberfläche.

Bei einer bevorzugten Ausführungsform ist der Pflanzenträger in einen Pflanzbehälter einsetzbar. Der Pflanzbehälter weist mindestens eine Medienkupplung auf, über welcher Energie und/oder Daten/Signale und/oder Nährstoffe, Wasser oder Luft zuführbar ist. Des Weiteren weist der Pflanzbehälter mindestens einen Ultraschallvernebler auf, welcher ein Nebel-Luft-Gemisch unterhalb der Pflanzfläche erzeugt.

Bei einer weiteren bevorzugten Ausführungsform befindet sich im Bodenbereich des Pflanzbehälters ein Hydro-Aero-System, welches aus einem Wasserreservoir und einem Ultraschallvernebler besteht. Am Boden des Behälters befindet sich beispielsweise ein 3cm hohes Wasser-Nährstoffgemisch und darüber ein Nebel-Luft-Gemisch, welches von dem Ultraschallvernebler erzeugt wird.

Vorzugsweise wird die Nährstoffversorgung und die Bewässerung für jeden einzelnen Pflanzbehälter separat geregelt. Die Menge der nachzufüllenden Nährstoffe oder des Fluids wird entweder in der Analysestrasse festgestellt oder von der im Pflanzbehälter angeordneten Messvorrichtung.

Es wird zusätzlich ein Schutz für ein Verfahren zur Aufzucht von Pflanzen beansprucht. Im Rahmen des Verfahrens zur Aufzucht von Pflanzen wird der erfindungsgemäße Pflanzenträger für die Kultivierung von Pflanzen bei einer vertikalen Landwirtschaft eingesetzt.

Bei dem Verfahren zur Aufzucht von Pflanzen wird mindestens ein Pflanzenträger eingesetzt, wobei der Pflanzenträger mindestens eine schlitzförmige, einseitig offene Aufnahme aufweist, in welche eine Vielzahl von Pflanzen in Richtung der Längserstreckung der Aufnahmen einsetzbar sind, wobei unterhalb des Pflanzenträgers eine Nährstofflösung für die Pflanzen vorhanden ist und in der Wachstumsphase der Pflanzen folgende Verfahrensschritte ausgeführt werden:
- Erste Wachstumsphase:
   Einsetzen der Pflanzen in mindestens eine erste Aufnahme eines ersten Pflanzenträgers (4a), wobei die erste Aufnahme (6) durch mindestens zwei voneinander beabstandete Stege (5) gebildet ist, zwischen welchen die Pflanzen einsetzbar sind;
- Zweite Wachstumsphase:
   Entnahme der Pflanzen aus dem ersten Pflanzenträger aus den Aufnahmen, Vereinzeln der Pflanzen und Einsetzen der Pflanzen in eine Aufnahme eines zweiten Pflanzenträgers.

Das Verfahren lässt sich beliebige mit weiteren Pflanzenträger erweitern, wobei mit dem Wachstum der Pflanzen jeweils ein Pflanzenträger mit weniger Aufnahmen eingesetzt wird. Gleichzeitig sollte die Anzahl der Pflanzenträger mit dem Wachstum erhöht werden, um weniger Pflanzen einen größeren Platz innerhalb des Pflanzbehälters zu geben.

Während der Wachstumsphase werden somit die einzelnen Pflanzen durch die unterschiedlichen Pflanzenträger in x-, γ- und z-Richtung beabstandet. Dadurch haben die Pflanzen während der Wachstumsphase stets einen ausreichenden Platz und eine optimale Belichtung. Die Pflanzenträger lassen sich einfach aus dem Pflanzbehälter entnehmen, wodurch die einzelnen Pflanzen leicht zugänglich sind. Die Aufnahmen für die Pflanzen sind als fingerartige Einschübe bzw. schlitzartige Aufnahmen ausgebildet. Dadurch können die Pflanzen leicht seitlich aus den stirnseitigen Öffnungen entnommen werden, ohne dass das Pflanzsubstrat hierbei beschädigt wird.

Im Rahmen des Verfahrens zur Aufzucht von Pflanzen kann der Pflanzenträger in einen Pflanzbehälter eingesetzt werden. Der Pflanzbehälter ist als einseitig offener, durch umlaufende, randseitige Wände abgegrenzter transportabler Pflanzbehälter ausgebildet, in dessen Bodenraum sich eine Nährstofflösung zur Aufzucht der Pflanzen befindet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematische Schnittansicht eines Pflanzbehälters mit einem Pflanzenträger
- Figur 2:: schematische Darstellungen des Pflanzbehälters mit vier verschiedenen Pflanzenträger
- Figur 3:: schematische Draufsicht auf die vier verschiedenen Pflanzenträger
- Figur 4:: schematische Seitenansicht der vier verschiedenen Pflanzenträger
- Figuren 5:: schematische Draufsichten auf die vier verschiedenen Pflanzenträger
- Figur 6:: schematische Darstellung der unterschiedlichen Abkantungen der Pflanzenträger
- Figur 7:: schematische Darstellung eines ersten Pflanzenträgers
- Figur 8:: Schnittdarstellung des ersten Pflanzenträgers
- Figur 9:: schematische Darstellung eines Pflanzenträgers
- Figur 10:: Schnittdarstellung des zweiten Pflanzenträgers
- Figur 11:: schematische Darstellung eines dritten Pflanzenträgers
- Figur 12:: Schnittdarstellung des dritten Pflanzenträgers
- Figur 13:: schematische Darstellung eines vierten Pflanzenträgers
- Figur 14:: Schnittdarstellung des vierten Pflanzenträgers
- Figur 15:: schematische Darstellung der Positionierung eines Pflanzsubstrates zwischen in einer Aufnahme (im Anfangsstadium)
- Figur 16:: schematische Darstellung eines Blecheinsatzes mit gefüllten Pflanzsubstraten
- Figur 17:: schematische Darstellung eines Pflanzbehälters mit eingesetztem Pflanzenträger
- Figur 18:: schematische Darstellung eines Umsetzvorganges
- Figur 19:: schematische Darstellung eines Entnahmevorganges einer Pflanze mit einem Greifer
- Figur 20:: schematische Darstellung eines Einsetzvorganges einer Pflanze mit einem Greifer

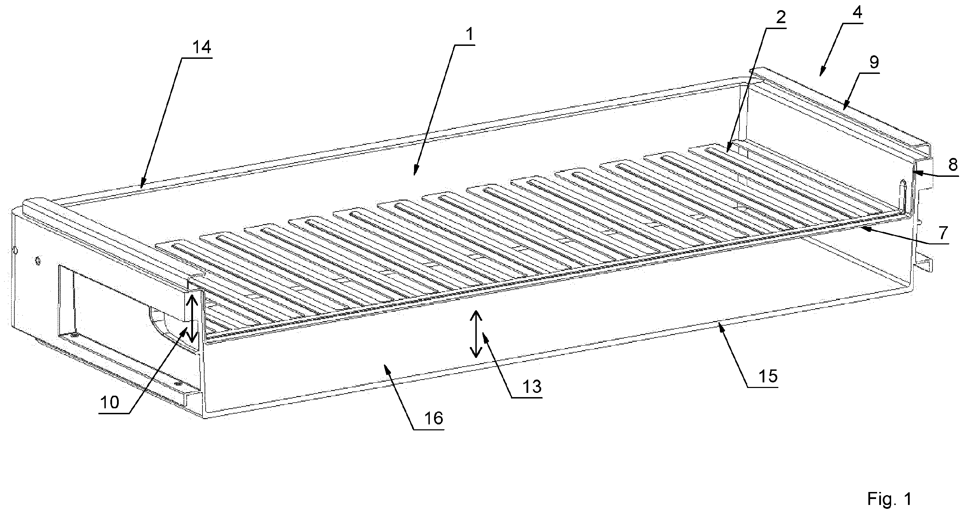

Mit den Figuren 1 wird schematisch ein Pflanzbehälter 1 mit einem Pflanzenträger 4 mit einer Schnittdarstellung gezeigt. Der Pflanzbehälter 1 ist rechteckförmig ausgebildet und weist umlaufende Wände 12 und einen umlaufenden Rand 14 auf. An zwei gegenüberliegenden Rändern 14 des Pflanzbehälters 1 ist der Pflanzenträger 4 eingehängt. Hierfür weist der Pflanzenträger 4 jeweils eine Abkantung 9 auf, wobei die Unterseite der Abkantung mit der Oberseite des Randes 14 in Kontakt ist. Die Höhe 10 der Abkantung 9 ist so gewählt, dass der Pflanzenträger 4 einen gewissen Abstand 13 gegenüber dem Boden 16 des Pflanzbehälters 1 aufweist. Die Abkantung 9 ist u-förmig ausgebildet, wodurch sie leicht von einer Hand oder einem Roboter greifbar ist.

Der Pflanzenträger 4 besteht aus einer bodenseitige Pflanzfläche 2 und zwei vertikal erstreckenden, seitlichen Wangen 8. Im Bereich der Pflanzfläche 2 sind Aufnahmen vorhanden, welche einseitig offen sind und auf der gegenüberliegenden Seite von einem quer verlaufenden Brückensteg 7 begrenzt sind.

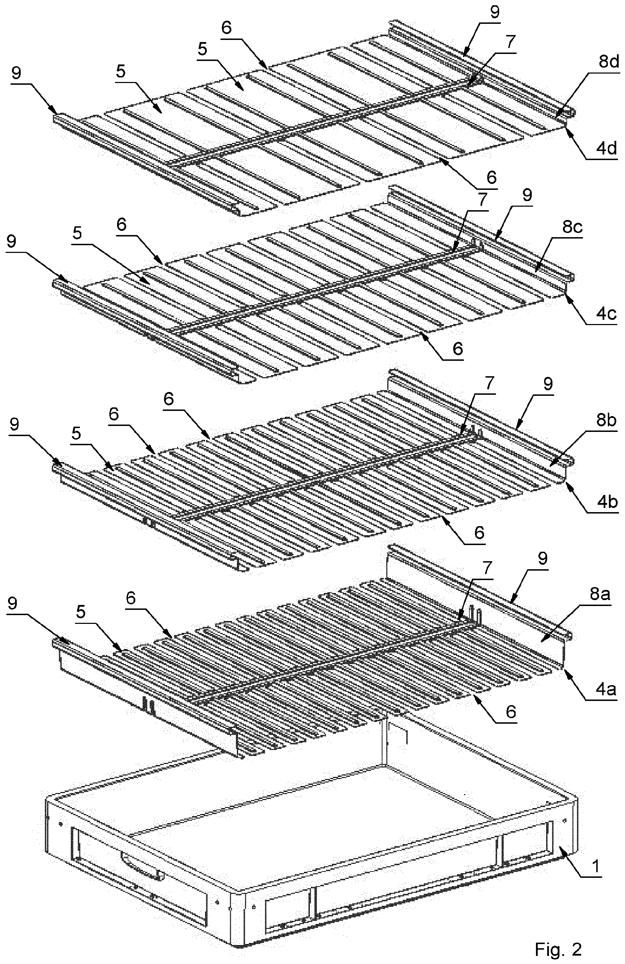

Mit der Figur 2 wird ein Pflanzbehälter 1 mit vier verschiedenen Pflanzenträgern 4a, 4b, 4c und 4d gezeigt. Die Behältereinsätze 4a, 4b, 4c 4d unterscheiden sich hinsichtlich der Anzahl der Aufnahmen 6 für die Pflanzen.

Und die Pflanzenträger 4, 4a, 4b, 4c, 4d weisen unterschiedliche, seitliche Wangen 8, 8a, 8b, 8c, 8d mit unterschiedliche Höhen 10, 10a, 10b, 10c, 10d auf, mit welchen sie an mindestens einem Rand 14 des Pflanzbehälters 1 einhängbar sind.

Der erste Pflanzenträger 4a wird in der ersten Wachstumsphase der Pflanze eingesetzt. In der ersten Wachstumsphase benötigen die Pflanzen noch wenige Platz. Aus diesem Grund weist der Pflanzenträger 4a die meiste Anzahl an Aufnahmen 6 auf, um möglichst viele Pflanzen aufzunehmen. Die Aufnahmen 6 werden durch die beabstandeten, parallelen Stege 5 gebildet. Zwischen zwei benachbarte Stege 5 werden die Pflanzen seitlich eingesteckt. Die Aufnahmen 6 halten damit entweder das Substrat 3 der Pflanze oder die Pflanze selbst.

Der zweite Pflanzenträger 4b wird in der zweiten Wachstumsphase der Pflanzen eingesetzt. Der zweite Pflanzenträger 4b weist gegenüber dem ersten Pflanzenträger 4a weniger Aufnahmen 6 auf. Bei einem Umsetzvorgang werden die Pflanzen aus dem ersten Pflanzenträger 4a auf ein-ein-halb zweite Pflanzenträger 4b verteilt. Damit wird sichergestellt, dass die bereits gewachsenen Pflanzen mehr Platz zur Verfügung haben.

Der dritte Pflanzenträger 4c wird in der dritten Wachstumsphase der Pflanzen eingesetzt. Der dritte Pflanzenträger 4c weist gegenüber dem zweiten Pflanzenträger 4b weniger Aufnahmen 6 auf.

Der vierte Pflanzenträger 4d wird in der vierten Wachstumsphase der Pflanzen eingesetzt. Der vierte Pflanzenträger 4d weist gegenüber dem dritten Pflanzenträger 4c weniger Aufnahmen 6 auf. Beim vierten Pflanzenträger 4d sind die Stege 6 sehr breit ausgebildet. Dadurch können die fast ausgewachsenen Pflanzen ausreichende auf den Stegen aufliegen und werden von den Stegen gehalten. Des Weiteren wird durch die Stegbreite ein ausreichender Abstand zu den benachbarten Pflanzen erreicht.

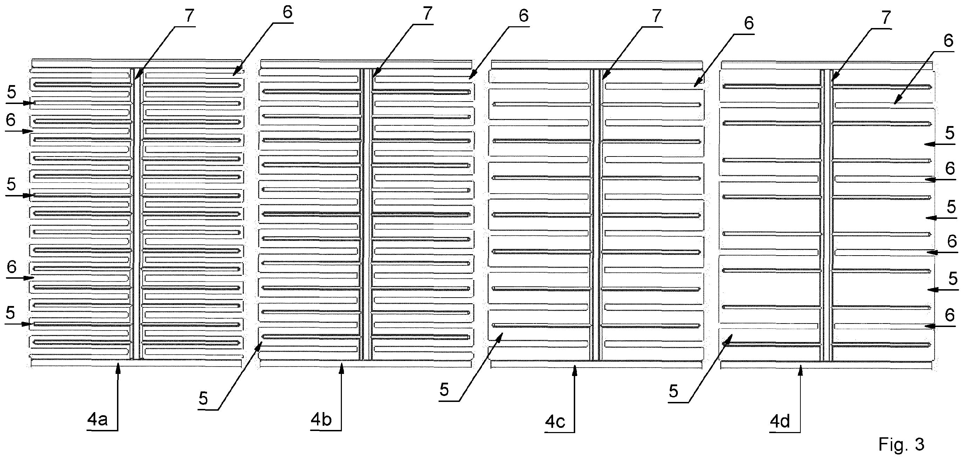

Die Figur 3 zeigt die vier unterschiedlichen Pflanzenträger 4a, 4b, 4c und 4d in einer Draufsicht. Es ist erkennbar, dass sich die Stege 5 hinsichtlich deren Breite unterscheiden. Da die Pflanzenträger alle die gleichen Abmessungen aufweisen, nimmt die Anzahl der Aufnahmen 6 ab, je breiter die Stege 5 sind. Anhand der Figur 3 ist ferner erkennbar, dass die Pflanzenträger 4, 4a, 4b, 4c und 4d eine eigene Einheit ausbilden und damit an unterschiedlichen Ort angeordnet werden kann.

Auf beiden Seiten des Brückenstegs 7 erstrecken sich die einseitig, offenen Aufnahmen 6. Der Brückensteg 7 dient zur Stabilisierung der Aufnahmen 6, da durch die zahlreichen Pflanzen ein hohes Gewicht auf die beiden beabstandeten Stege 5 wirkt.

Bei einer nicht-gezeigten Ausführungsform ist es jedoch auch möglich, dass sich nur zu einer Seite des Brückenstegs 7 die Aufnahmen 6 erstrecken. Der Brückensteg 7 befindet sich dann im Randbereich des Pflanzenträgers 4.

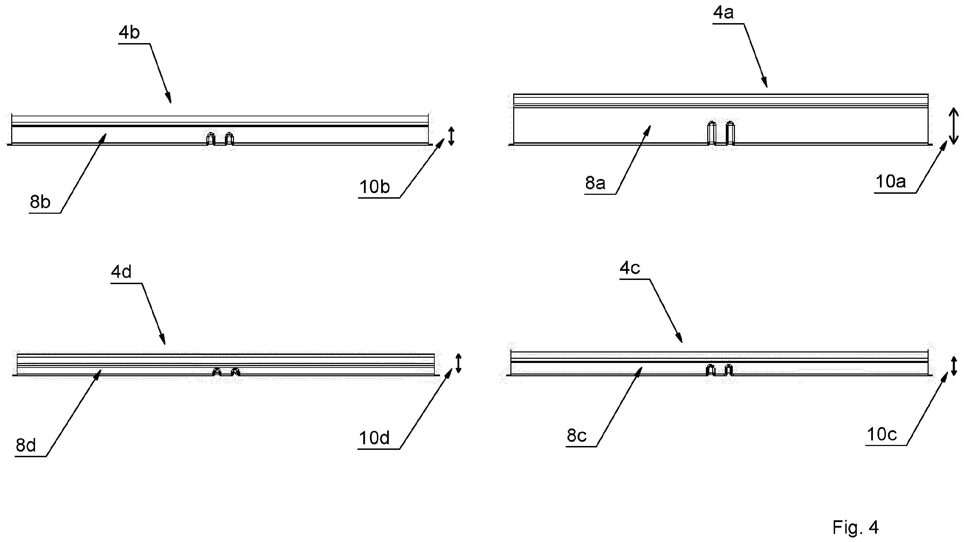

Figur 4 zeigt die einzelnen Pflanzenträger 4a, 4b, 4c und 4d in einer schematischen Seitenansicht. Anhand der Seitenansicht kann man erkennen, dass sich die Höhen 10a, 10b, 10c, 10d der einzelnen Pflanzenträger 4a, 4b, 4c und 4d unterscheiden. Durch die unterschiedlichen Höhen 10a, 10b, 10c, 10d wird eine unterschiedliche Beabstandung der Pflanzfläche gegenüber dem Boden des Pflanzbehälters bzw. gegenüber der Nährstofflösung erreicht.

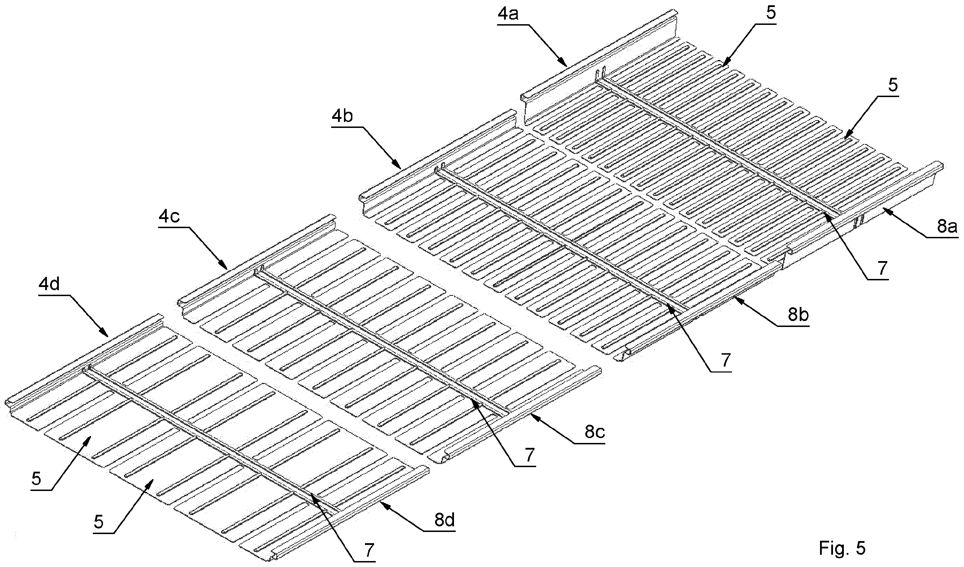

Mit der Figur 5 werden die einzelnen Pflanzenträger 4a, 4b, 4c und 4d in jeweils einer Draufsicht gezeigt. Die Pflanzenträger 4a, 4b, 4c und 4d sind korbartig ausgebildet und können so in einen Halter oder einen Pflanzbehälter eingehängt werden. Die heranwachsenden Pflanzen werden von den jeweiligen Aufnahmen 6 gehalten und fixiert werden. Anhand der Figur 5 ist erkennbar, dass die Aufnahmen 6 durch einen Brückensteg 7 geteilt sind. Die einzelnen Aufnahmen 6 sind kammartig bzw. rechenartig ausgebildet und erstrecken sich von beiden Seiten in Richtung des mittigen Brückensteg 7.Mit dem Brückensteg 7 wird die Stabilität erhöht. Dies ist immer dann sinnvoll, wenn die Stege 5 aus einem dünnen Material bestehen und sich ansonsten durch das Gewicht der Pflanzen durchbiegen würden.

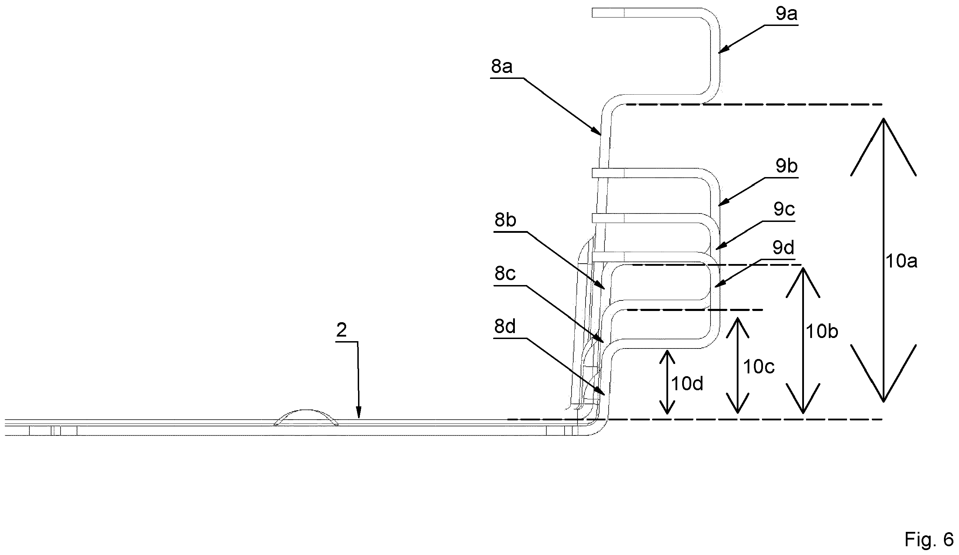

Figur 6 zeigt die unterschiedlichen Wangen 8 und die unterschiedlichen Abkantungen 9 der einzelnen Pflanzenträger 4. Der erste Pflanzenträger 4a weist eine Wange 8a mit einer Abkantung 9a in einer ersten Höhe 10a auf. Die Höhe 10a bemisst sich ausgehen von der Unterseite der Abkantung 9a bis zur Pflanzfläche 2.

Der zweite Pflanzenträger 4b weist eine Wange 8b mit einer Abkantung 9b in einer zweiten Höhe 10b auf. Die Höhe 10b bemisst sich ebenfalls von der Unterseite der Abkantung 9b bis zur Pflanzfläche 2. Die zweite Höhe 10b ist geringer als die erste Höhe 10a. Dadurch wird erreicht, dass die Pflanzfläche 2 des zweiten Pflanzenträgers 4b einen größeren Abstand 13 gegenüber dem Boden 16 des Pflanzbehälters 1 aufweist. Der Abstand 13 kann alternativ auch zwischen der Pflanzfläche 2 und der Nährstofflösung 15 sein.

Der dritte Pflanzenträger 4c weist eine Wange 8c mit einer Abkantung 9c in einer dritten Höhe 10c auf. Die dritte Höhe 10c ist geringer als die zweite Höhe 10b und die erste Höhe 10a. Dadurch wird erreicht, dass die Pflanzfläche 2 des dritten Pflanzenträger 4c einen größeren Abstand 13 gegenüber dem Boden 16 des Pflanzbehälters 1 aufweist.

Und der vierte Pflanzenträger 4d weist eine Wange 8d mit einer Abkantung 9d in einer vierten Höhe 10d auf. Die vierte Höhe 10d ist geringer als die dritte Höhe 10c. Dadurch wird erreicht, dass die Pflanzfläche 2 des vierten Pflanzenträger 4d einen größeren Abstand 13 gegenüber dem Boden 16 des Pflanzbehälters 1 aufweist.

Durch die unterschiedlichen Höhen 10a, 10b, 10c, 10d kann der Abstand 13 zwischen der Pflanzfläche 2 und dem Boden 16 des Pflanzbehälters 1 bestimmt werden. Dadurch wird erreicht, dass die Wurzeln der Pflanzen während der Wachstumsphase stets mit der Nährstofflösung 15, welche sich am Boden 16 des Pflanzbehälters 1 befindet, in Kontakt sind.

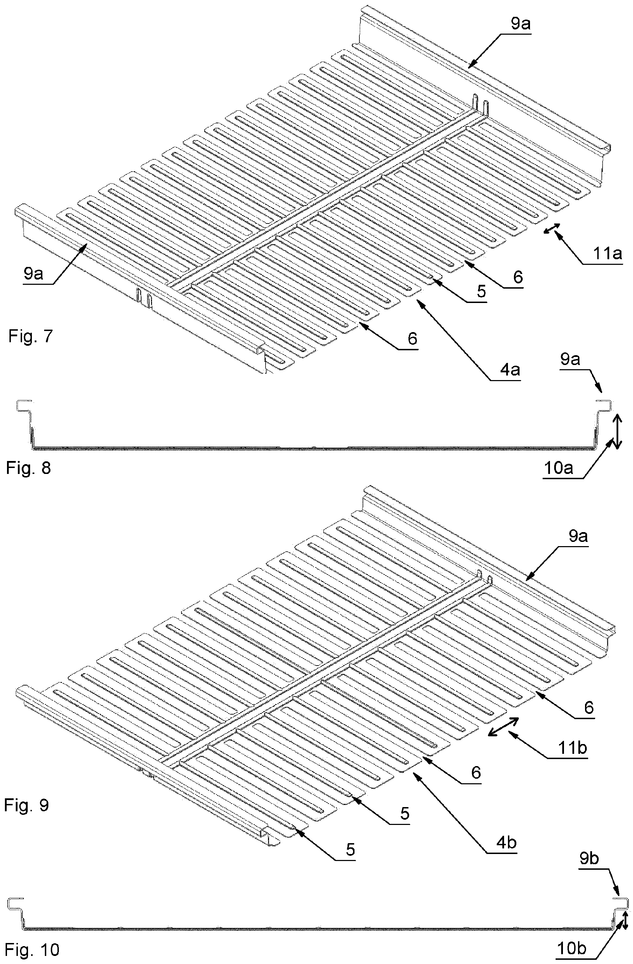

Mit den Figuren 7 und 8 wird der erste Pflanzenträger 4a in zwei unterschiedlichen Ansichten gezeigt. Der erste Pflanzenträger 4a weist parallel angeordnete, beabstandete Stege 5 auf, wobei zwei benachbarte Stege 5 eine schlitzförmige Aufnahme 6 für die Pflanzen 3 bilden. Die Stege 5 weisen eine Breite 5a auf. Die Höhe 10a bemisst sich von der Unterseite der Abkantung 9a bis zur Pflanzfläche 2.

Die Figuren 9 und 10 zeigen den zweiten Pflanzenträger 4b. Der zweite Pflanzenträger 4b unterscheidet sich gegenüber dem ersten Pflanzenträger 4a durch die unterschiedliche Breite 11b seiner Stege 5 und die unterschiedliche Höhen 10b. Die Breite 11b der Stege 5 ist breiter als die Breite 11a des ersten Pflanzenträger 4a. Die Höhe 10b ist geringer als die Höhe 10a.

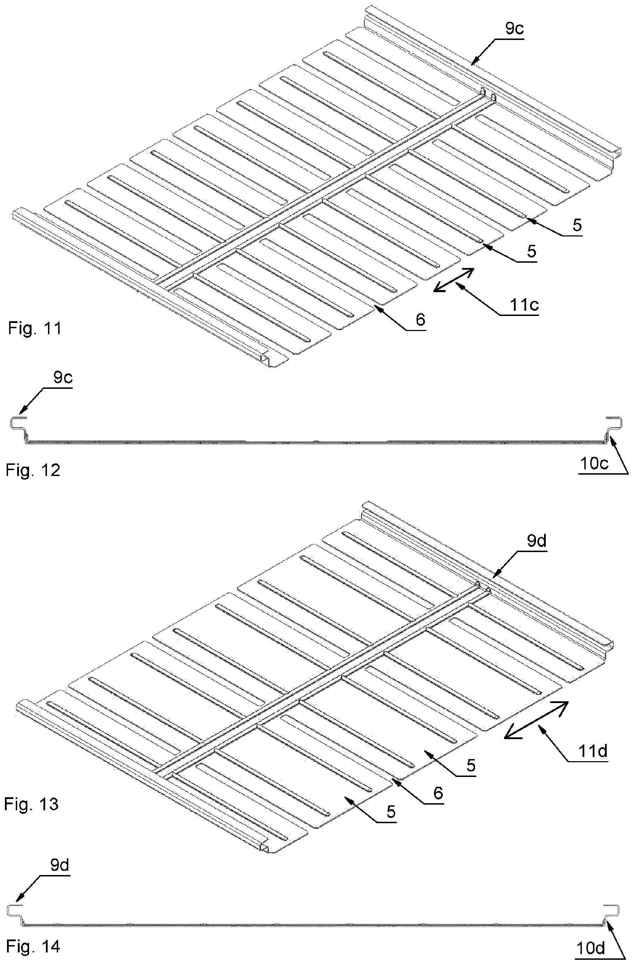

Mit den Figuren 11 und 12 wird der dritte Pflanzenträger 4c gezeigt. Der dritte Pflanzenträger 4c weist eine Höhe 10c auf, welche geringer als die Höhen 10b und 10a ist. Des Weiteren ist die Breite 11c der Stege 5 des dritten Pflanzenträger 4c breiter als die Breiten 11b und 11a.

Die Figuren 13 und 14 zeigen den vierten Pflanzenträger 4d gezeigt. Der vierte Pflanzenträger 4d weist eine Höhe 10d auf, welche geringer als die Höhen 10c, 10b und 10a ist. Des Weiteren ist die Breite 11d der Stege 5 des vierten Pflanzenträger 4d breiter als die Breiten 11c, 11b und 11a.

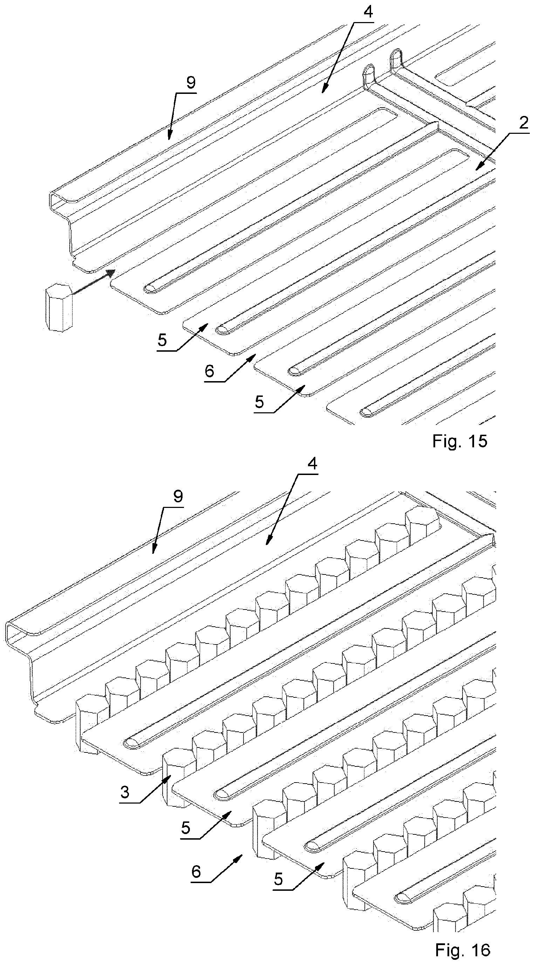

Mit der Figur 15 wird schematisch das Einsetzen einer Pflanze 3 in der Aufnahme 6 eines Pflanzenträger 4 gezeigt. Das Einsetzen der Pflanzen erfolgt beispielsweise mit einem Handling-Gerät, wobei bevorzugt das Substrat 3 der Pflanze zwischen die beiden beabstandeten Stege 5 eingesteckt bzw. eingeklemmt wird.

Figur 16 zeigt einen vollen Pflanzenträger 4. Alle Aufnahmen 6 sind mit Substraten 3 belegt. Die Stege 5 sind fingerartig ausgebildet, wobei in dem Zwischenraum jeweils die einzelnen Substrate der Pflanzen angeordnet sind.

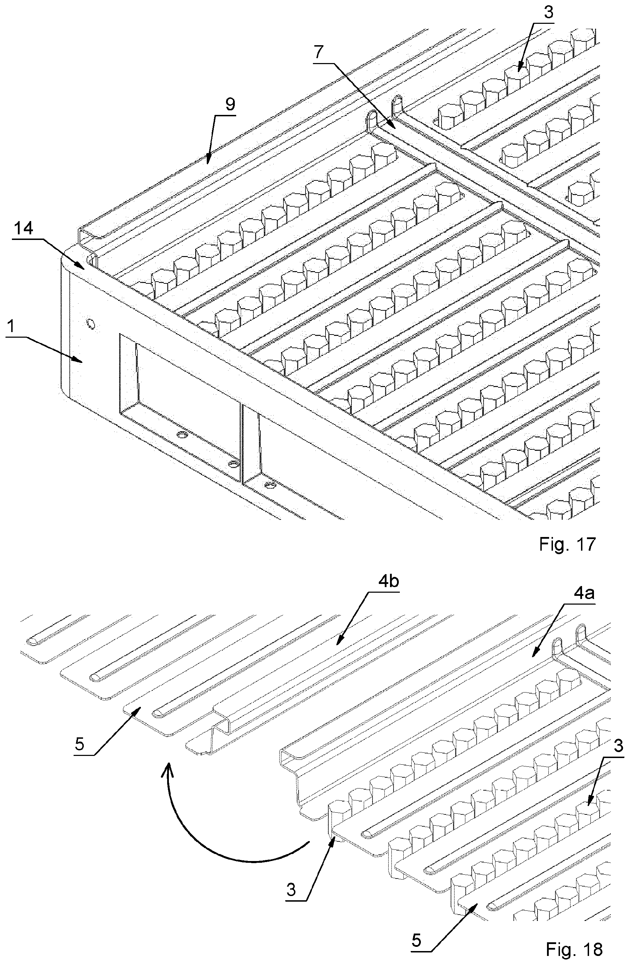

Mit der Figur 17 wird ein Pflanzbehälter 1 mit einem Pflanzenträger 4 gezeigt. Der Pflanzenträger 4 ist mit seiner Abkantung 9 in den Rand 14 des Pflanzbehälters 1 eingehängt. Mit einem Lastaufnahmemittel mit z.B. zwei voneinander beabstandeten Teleskoparmen lässt sich der Pflanzenträger 4 leicht in den Pflanzbehälter 1 einsetzen und wieder aus dem Pflanzbehälter 1 herausnehmen.

Figur 18 zeigt schematisch einen Umsetzvorgang der Pflanzen ausgehend von einem ersten Pflanzenträger 4a in einen zweiten Pflanzenträger 4b. Es ist erkennbar, dass sich die Breiten 11 der einzelnen Stege 5 des ersten Pflanzenträgers 4a gegenüber dem zweiten Pflanzenträgers 4b unterscheiden.

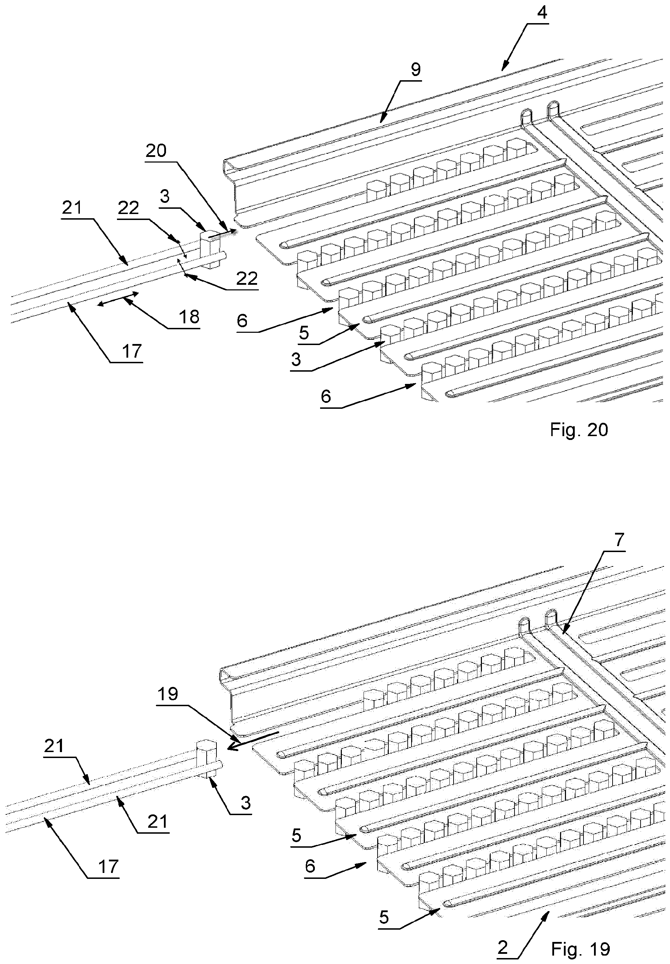

Die Figuren 19 und 20 zeigen einen automatisierten Vereinzelungsvorgang mit einem Greifer 17. Der Greifer 17 weist zwei zangenartigen Greifarme 21 auf, mit welchem das Substrat 3 der Pflanze greifbar sind. Selbstverständlich können die Greifarme 21 auch so ausgebildet sein, dass beispielsweise die Pflanze am Strunk oder am Stiel greifbar ist. Die Greifarme 21 lassen sich in Pfeilrichtung 22 auf und zu machen, wodurch ein bzw. mehrere Substrate 3 festgehalten und wieder losgelassen werden.

Mit der Figur 19 wird mit dem Greifer 17 eine Pflanze aus der Aufnahme 6 eines Pflanzenträgers 4 entnommen. Die Pflanze wird mit den beiden Greifarmen 21 des Greifer 17 im Bereich des Substrates 3 gehalten und in Pfeilrichtung 19 aus der einseitig offenen Aufnahme 6 herausgezogen. Hierzu fassen die Greifarme 21 das Substrat 3 unterhalb des Pflanzenträgers 4 bzw. unterhalb der Pflanzfläche 2. Es findet hierbei kein vertikales Anheben oder Absenken der Pflanze gegenüber der Pflanzenträger 4 statt, sondern nur ein horizontales Herausziehen der Pflanzen aus den Aufnahmen 6.

Figur 20 zeigt den Einsetzvorgang einer Pflanze mit Hilfe des Greifers 17. Der Greifer 17 hält mit seinen beiden Greifarmen 21 die Pflanze im Bereich des Substrates 3 und schiebt dieses in Pfeilrichtung 20 zwischen die beiden Stege 5 ein, welche eine Aufnahme 6 bilden.

Mit dem erfindungsgemäßen Pflanzenträger 4 ist es nun möglich mehr Pflanzen auf der gleichen Fläche mit einer Lichtquelle zu beleuchten. Dies wird durch die unterschiedlichen Pflanzenträger 4a, 4b, 4c und 4d erreicht, wobei die Anzahl Aufnahmen 6 an den jeweiligen Wachstumszustand und Platzbedarf der Pflanzen 3 anpassbar ist. Da die Pflanzen während der Wachstumsphase aus einer einseitig offenen Aufnahme 6 entnehmbar sind, findet keine Beschädigung der Wurzeln statt. Darüber hinaus können automatisiert mehrere Pflanzen auf einmal aus dem Pflanzenträger 4 entnommen werden und in einen neuen Pflanzbehälter 1 umgesetzt werden.

### Zeichnungslegende

1. Pflanzbehälter
2. Pflanzfläche
3. Substrat
4. Pflanzenträger 4a, 4b, 4c, 4d
5. Steg
6. Aufnahme
7. Brückensteg
8. Wangen 8a, 8b, 8c, 8d
9. Abkantung 9a, 9b, 9c, 9d
10. Höhe 10a, 10b, 10c, 10d
11. Breite
12. Wand von 1
13. Abstand
14. Rand von 1
15. Nährstofflösung
16. Boden von 1
17. Greifer
18. Pfeilrichtung vor/zurück
19. Pfeilrichtung
20. Pfeilrichtung
21. Greifarm
22. Pfeilrichtung auf/zu

## Patentansprüche

**1.** Pflanzenträger (4, 4a, 4b, 4c, 4d) zur Aufzucht von Pflanzen mit mindestens einer Pflanzfläche (2), wobei die Pflanzen in mehreren nebeneinander angeordneten Aufnahmen (6) einsetzbar sind, wobei unterhalb der Pflanzfläche (2) des Pflanzenträgers (4, 4a, 4b, 4c, 4d) eine Nährstofflösung (15) für die Pflanzen vorhanden ist, **dadurch gekennzeichnet, dass** der Pflanzenträger (4, 4a, 4b, 4c, 4d) schlitzförmige, mindestens einseitig offene Aufnahmen (6) aufweist, in welche die Pflanzen in Richtung der Längserstreckung der Aufnahmen (6) einsetzbar sind.

**2.** Pflanzenträger (4, 4a, 4b, 4c, 4d) nach Anspruch 1, **dadurch gekennzeichnet, dass** die Aufnahmen (6) des Pflanzenträgers (4, 4a, 4b, 4c, 4d) jeweils zwei beabstandete Stegen (5) aufweisen, zwischen welchen die Pflanzen einsetzbar sind.

**3.** Pflanzenträger (4, 4a, 4b, 4c, 4d) nach Anspruch 1 oder 2, **dadurch gekennzeichnet, dass** die Pflanzenträger (4, 4a, 4b, 4c, 4d) mehrere beabstandete Stege (5) mit unterschiedlichen Breiten (11, 11a, 11b, 11c, 11d) aufweisen.

**5.** Pflanzenträger (4, 4a, 4b, 4c, 4d) nach einem der Ansprüche 1 bis 4, **dadurch gekennzeichnet, dass** der Pflanzenträger (4, 4a, 4b, 4c, 4d) aus einer bodenseitige Pflanzfläche (2) und zwei vertikal erstreckenden, seitlichen Wangen (8, 8a, 8b, 8c, 8d) besteht und dass im Bereich der Pflanzfläche (2) die Aufnahmen (6) vorhanden sind, welche einseitig offen sind und auf der gegenüberliegenden Seite von einem quer verlaufenden Brückensteg (7) begrenzt sind.

**6.** Pflanzenträger (4, 4a, 4b, 4c, 4d) nach einem der Ansprüche 1 bis 5, **dadurch gekennzeichnet, dass** der Pflanzenträger (4, 4a, 4b, 4c, 4d) seitliche Wangen (8, 8a, 8b, 8c, 8d) mit Abkantungen (9, 9a, 9b, 9c, 9d) hat, welche eine Höhe (10, 10a, 10b, 10c, 10d) gegenüber der Pflanzfläche (2) aufweisen, wobei sich die Höhen (10, 10a, 10b, 10c, 10d) der Abkantungen (9, 9a, 9b, 9c, 9d) zwischen den einzelnen Pflanzenträger ((4, 4a, 4b, 4c, 4d) unterscheiden.

**7.** Pflanzenträger (4, 4a, 4b, 4c, 4d) nach einem der Ansprüche 1 bis 6, **dadurch gekennzeichnet, dass** der Abstand (13) zwischen der Nährstofflösung (15) und der Pflanzfläche (2) bei zumindest zwei Pflanzenträgern (4, 4a, 4b, 4c, 4d) unterschiedlich ist.

**8.** Pflanzenträger (4, 4a, 4b, 4c, 4d) nach einem der Ansprüche 1 bis 7, **dadurch gekennzeichnet, dass** der Pflanzenträger (4, 4a, 4b, 4c, 4d) in einen Pflanzbehälter (1) einsetzbar oder aus dem Pflanzbehälter (1) entnehmbar ist.

**9.** Pflanzenträger (4, 4a, 4b, 4c, 4d) nach einem der Ansprüche 1 bis 7, **dadurch gekennzeichnet, dass** der Pflanzenträger (4, 4a, 4b, 4c, 4d) in einen Regallagerplatz eines Hochregallagers einsetzbar oder aus dem Regallagerplatz entnehmbar ist.

**10.** Pflanzenträger (4, 4a, 4b, 4c, 4d) nach einem der Ansprüche 1 bis 9, **dadurch gekennzeichnet, dass** der Pflanzenträger (4, 4a, 4b, 4c, 4d) mit einem Transportroboter bewegbar ist.

**11.** Vorrichtung zur Aufzucht von Pflanzen, bestehend aus mindestens einem Pflanzbehälter (1) in dessen Innenraum mindestens ein Pflanzenträger (4, 4a, 4b, 4c, 4d) anordnenbar ist, wobei der Pflanzenträger (4, 4a, 4b, 4c, 4d) mehrere nebeneinander angeordnete Aufnahmen (6) aufweist, in welche die Pflanzen einsetzbar sind, **dadurch gekennzeichnet, dass** der Pflanzenträger (4, 4a, 4b, 4c, 4d) schlitzförmige, mindestens einseitig offene Aufnahmen (6) aufweist, in welche die Pflanzen in Richtung der Längserstreckung der Aufnahmen (6) einsetzbar sind.

**12.** Vorrichtung zur Aufzucht von Pflanzen nach Anspruch 11, **dadurch gekennzeichnet, dass** der Pflanzbehälter (1) als einseitig offener, durch umlaufende, randseitige Wände (12) abgegrenzter transportabler Pflanzbehälter (1) ausgebildet ist, in dessen Boden (16) eine Nährstofflösung (15) zur Aufzucht der Pflanzen (3) angeordnet ist.

**13.** Vorrichtung zur Aufzucht von Pflanzen nach Anspruch 11 oder 12, **dadurch gekennzeichnet, dass** der Pflanzbehälter (1) mindestens eine Medienkupplung aufweist, über welcher Energie und/oder Daten/Signale und/oder Nährstoffe, Wasser oder Luft zuführbar ist und dass der Pflanzbehälter (1) mindestens einen Ultraschallvernebler aufweist, welcher ein Nebel-Luft-Gemisch unterhalb der Pflanzfläche (2) erzeugt.

**14.** Vorrichtung zur Aufzucht von Pflanzen nach einem der Ansprüche 11 bis 13, **dadurch gekennzeichnet, dass** der Pflanzenträger (4, 4a, 4b, 4c, 4d) gemäß den Ansprüchen 1 bis 10 ausgebildet ist.

**15.** Verfahren zur Aufzucht von Pflanzen mit mindestens einem Pflanzenträger (4, 4a, 4b, 4c, 4d), wobei der Pflanzenträger (4, 4a, 4b, 4c, 4d) mindestens eine schlitzförmige, einseitig offene Aufnahme (6) aufweist, in welche eine Vielzahl von Pflanzen in Richtung der Längserstreckung der Aufnahmen (6) einsetzbar sind, wobei in der Wachstumsphase der Pflanzen folgende Verfahrensschritte ausgeführt werden:
• Erste Wachstumsphase: Einsetzen der Pflanzen in mindestens eine erste Aufnahme (6) eines ersten Pflanzenträgers (4a), wobei die erste Aufnahme (6) durch mindestens zwei voneinander beabstandete Stege (5) gebildet ist, zwischen welchen die Pflanzen einsetzbar sind;
• Zweite Wachstumsphase: Entnahme der Pflanzen aus der Aufnahme (6) des ersten Pflanzenträgers (4a), Vereinzeln der Pflanzen und Einsetzen der Pflanzen in mindestens eine zweite Aufnahme (6) eines zweiten Pflanzenträgers (4b);

**16.** Verfahren zur Aufzucht von Pflanzen nach Anspruch 14, **dadurch gekennzeichnet, dass** der Pflanzenträger (4, 4a, 4b, 4c, 4d) in einen Pflanzbehälter (1) einsetzbar ist und dass der Pflanzbehälter (1) als einseitig offener, durch umlaufende, randseitige Wände (12) abgegrenzter transportabler Pflanzbehälter (1) ausgebildet ist, in dessen Bodenraum die Nährstofflösung (15) zur Aufzucht der Pflanzen (3) angeordnet ist.

## Geänderte Patentansprüche

### Geänderte Patentansprüche gemäss Regel 137(2) EPÜ.

1. Pflanzenträger (4, 4a, 4b, 4c, 4d) zur Aufzucht von Pflanzen mit mindestens einer Pflanzfläche (2), wobei die Pflanzen in mehreren nebeneinander angeordneten Aufnahmen (6) einsetzbar sind, **dadurch gekennzeichnet, dass** der Pflanzenträger (4, 4a, 4b, 4c, 4d) schlitzförmige, mindestens einseitig offene Aufnahmen (6) aufweist, in welche die Pflanzen in Richtung der Längserstreckung der Aufnahmen (6) einsetzbar sind und dort gehalten werden, wobei während des Wachstumsstadiums der Pflanzen mehrere, unterschiedliche Pflanzenträger (4, 4a, 4b, 4c, 4d) mit einer unterschiedlichen Anzahl an Aufnahmen (6) einsetzbar sind.

2. Pflanzenträger (4, 4a, 4b, 4c, 4d) nach Anspruch 1, **dadurch gekennzeichnet, dass** der Pflanzenträger (4, 4a, 4b, 4c, 4d) in einen Pflanzbehälter (1) einsetzbar oder aus dem Pflanzbehälter (1) entnehmbar ist, wobei unterhalb der Pflanzfläche (2) des Pflanzenträgers (4, 4a, 4b, 4c, 4d) eine Nährstofflösung (15) für die Pflanzen vorhanden ist.

3. Pflanzenträger (4, 4a, 4b, 4c, 4d) nach einem der Ansprüche 1 oder 2, **dadurch gekennzeichnet, dass** die Aufnahmen (6) kammartig, rechenartig oder fingerartig ausgebildet sind.

4. Pflanzenträger (4, 4a, 4b, 4c, 4d) nach einem der Ansprüche 1 bis 3, **dadurch gekennzeichnet, dass** die Aufnahme (6) aus jeweils zwei beabstandeten Stegen (5) besteht, zwischen welchen die Pflanzen eingesetzt und klemmend gehalten werden.

5. Pflanzenträger (4, 4a, 4b, 4c, 4d) nach einem der Ansprüche 1 bis 4, **dadurch gekennzeichnet, dass** die unterschiedlichen Pflanzenträger (4, 4a, 4b, 4c, 4d) alle die gleichen Abmessungen aufweisen, wobei die einzelnen Pflanzenträger (4, 4a, 4b, 4c, 4d) mehrere beabstandete Stege (5) mit unterschiedlichen Breiten (11, 11a, 11b, 11c, 11d) aufweisen.

6. Pflanzenträger (4, 4a, 4b, 4c, 4d) nach einem der Ansprüche 1 bis 5, **dadurch gekennzeichnet, dass** die Pflanzenträger (4, 4a, 4b, 4c, 4d) aus einer bodenseitige Pflanzfläche (2) und zwei vertikal erstreckenden, seitlichen Wangen (8, 8a, 8b, 8c, 8d) bestehen und dass im Bereich der Pflanzfläche (2) die Aufnahmen (6) vorhanden sind, welche einseitig offen sind und auf der gegenüberliegenden Seite von einem quer verlaufenden Brückensteg (7) begrenzt sind.

7. Pflanzenträger (4, 4a, 4b, 4c, 4d) nach einem der Ansprüche 1 bis 6, **dadurch gekennzeichnet, dass** die unterschiedlichen Pflanzenträger (4, 4a, 4b, 4c, 4d) unterschiedliche seitliche Wangen (8, 8a, 8b, 8c, 8d) mit unterschiedlichen Abkantungen (9, 9a, 9b, 9c, 9d) haben, welche unterschiedliche Höhen (10, 10a, 10b, 10c, 10d) gegenüber der Pflanzfläche (2) aufweisen.

8. Pflanzenträger (4, 4a, 4b, 4c, 4d) nach einem der Ansprüche 2 bis 7, **dadurch gekennzeichnet, dass** der Abstand (13) zwischen der Nährstofflösung (15) und der Pflanzfläche (2) bei zumindest zwei Pflanzenträgern (4, 4a, 4b, 4c, 4d) unterschiedlich ist.

9. Pflanzenträger (4, 4a, 4b, 4c, 4d) nach einem der Ansprüche 1 bis 8, **dadurch gekennzeichnet, dass** der Pflanzenträger (4, 4a, 4b, 4c, 4d) in einen Regallagerplatz eines Hochregallagers einsetzbar oder aus dem Regallagerplatz entnehmbar ist, wobei der Pflanzenträger (4, 4a, 4b, 4c, 4d) mit einem Transportroboter bewegbar ist.

10. Vorrichtung zur Aufzucht von Pflanzen, bestehend aus mindestens einem Pflanzbehälter (1) in dessen Innenraum mindestens ein Pflanzenträger (4, 4a, 4b, 4c, 4d) anordnenbar ist, wobei der Pflanzenträger (4, 4a, 4b, 4c, 4d) mehrere nebeneinander angeordnete Aufnahmen (6) aufweist, in welche die Pflanzen einsetzbar sind, **dadurch gekennzeichnet, dass** der Pflanzenträger (4, 4a, 4b, 4c, 4d) schlitzförmige, mindestens einseitig offene Aufnahmen (6) aufweist, in welche die Pflanzen in Richtung der Längserstreckung der Aufnahmen (6) einsetzbar sind und dort gehalten werden, wobei während des Wachstumsstadiums der Pflanzen mehrere, unterschiedliche Pflanzenträger (4, 4a, 4b, 4c, 4d) mit unterschiedlicher Anzahl an Aufnahmen (6) einsetzbar sind.

11. Vorrichtung zur Aufzucht von Pflanzen nach Anspruch 11, **dadurch gekennzeichnet, dass** der Pflanzbehälter (1) als einseitig offener, durch umlaufende, randseitige Wände (12) abgegrenzter transportabler Pflanzbehälter (1) ausgebildet ist, in dessen Boden (16) eine Nährstofflösung (15) zur Aufzucht der Pflanzen (3) angeordnet ist.

12. Vorrichtung zur Aufzucht von Pflanzen nach Anspruch 11 oder 12, **dadurch gekennzeichnet, dass** der Pflanzbehälter (1) mindestens eine Medienkupplung aufweist, über welcher Energie und/oder Daten/Signale und/oder Nährstoffe, Wasser oder Luft zuführbar ist und dass der Pflanzbehälter (1) mindestens einen Ultraschallvernebler aufweist, welcher ein Nebel-Luft-Gemisch unterhalb der Pflanzfläche (2) erzeugt.

13. Vorrichtung zur Aufzucht von Pflanzen nach einem der Ansprüche 11 bis 13, **dadurch gekennzeichnet, dass** der Pflanzenträger (4, 4a, 4b, 4c, 4d) gemäß den Ansprüchen 1 bis 9 ausgebildet ist.

14. Verfahren zur Aufzucht von Pflanzen mit mindestens einem Pflanzenträger (4, 4a, 4b, 4c, 4d), wobei der Pflanzenträger (4, 4a, 4b, 4c, 4d) mindestens eine schlitzförmige, einseitig offene Aufnahme (6) aufweist, in welche eine Vielzahl von Pflanzen in Richtung der Längserstreckung der Aufnahmen (6) einsetzbar sind, wobei in der Wachstumsphase der Pflanzen mehrere, unterschiedliche Pflanzenträger (4, 4a, 4b) mit einer unterschiedlichen Anzahl an Aufnahmen eingesetzt werden und die folgenden Verfahrensschritte ausgeführt werden:
• Erste Wachstumsphase: Einsetzen der Pflanzen in mindestens eine erste Aufnahme (6) eines ersten Pflanzenträgers (4, 4a), wobei die erste Aufnahme (6) durch mindestens zwei voneinander beabstandete Stege (5) gebildet ist, zwischen welchen die Pflanzen einsetzbar sind,
• Zweite Wachstumsphase: Entnahme der Pflanzen aus der Aufnahme (6) des ersten Pflanzenträgers (4, 4a), Vereinzeln der Pflanzen und Einsetzen der Pflanzen in mindestens eine zweite Aufnahme (6) eines zweiten, unterschiedlichen Pflanzenträgers (4, 4b).

15. Verfahren zur Aufzucht von Pflanzen nach Anspruch 14, **dadurch gekennzeichnet, dass** der Pflanzenträger (4, 4a, 4b, 4c, 4d) in einen Pflanzbehälter (1) einsetzbar ist und dass der Pflanzbehälter (1) als einseitig offener, durch umlaufende, randseitige Wände (12) abgegrenzter transportabler Pflanzbehälter (1) ausgebildet ist, in dessen Bodenraum die Nährstofflösung (15) zur Aufzucht der Pflanzen (3) angeordnet ist.
